**Europäisches Patentamt**

**European Patent Office**

**Office européen des brevets**

(19)

(11) Publication number: 0 194 123

A2

# (12) EUROPEAN PATENT APPLICATION

(21) Application number: 86301483.3

(22) Date of filing: 03.03.86

(51) Int. Cl.4: H04Q 1/14

(30) Priority: 04.03.85 US 707610

(43) Date of publication of application:
10.09.86 Bulletin 86/37

(84) Designated Contracting States:
AT BE CH DE FR GB IT LI LU NL SE

(71) Applicant: ADC TELECOMMUNICATIONS, INC.
4900 West 78th Street
Minneapolis Minnesota 55435(US)

(72) Inventor: Singer, Loren A., Jr.
307 West 15th Street
Minneapolis Minnesota 55403(US)

(74) Representative: Darby, David Thomas et al
Abel & Imray Northumberland House 303-306 High
Holborn
WC1V 7LH London(GB)

(54) Modular distribution frame with protector structure and module for use therein.

(57) A modular distribution frame for use in telecommunications is disclosed. The frame incorporates a overload protector element which utilizes a printed circuit board as a primary contact structure. The frame is constructed of a number of individual modules, each of which is front accessible for use in both wiring and test access. The structure incorporates a reversible wire guide to facilitate wiring of a module from either the right or left hand side of a particular mounting bracket. The individual modules also use split cylinder insulation displacement connectors which are readily accessible from the front of the module and terminate in spring fingers which make contact to the overload protector elements.

## "MODULAR DISTRIBUTION FRAME WITH PROTECTOR STRUCTURE AND MODULE FOR USE THEREIN"

Technical Field of the Invention

The present invention pertains generally to the field of telecommunications, and more particularly to the structure of distribution frames for distributing or cross-connecting incoming telecommunication lines, and overload protectors and test access features for such lines.

Background of the Invention

Distribution frames are widely used in the telecommunications industry to interconnect equipment and distribution lines. At this time typical distribution frames at a minimum consist of a panel or array containing a number of connection terminals, which may be wire wrapped post or insulation displacement terminals. The terminals are mounted on the front of the frames or panels on flat sheet metal members such that the lines entering or leaving the distribution frame may be connected directly to the terminals. Typically the distribution line and the equipment lines are connected to the rear side of a panel, with distribution or cross-connection between the terminals effected from the front side.

Distribution frames conventional in the prior art also include "protection" for operators and equipment This may be provided either by overvoltage protection circuits or overcurrent protection circuits which are wired between the equipment and distribution lines to protect against transfer from the distribution lines to equipment or equipment operators of environmental hazards such as lightning, the effects of which would otherwise be routed directly to electrical equipment interfaced with the lines on the distribution frame.

Distribution frames of this type have certain limitations or disadvantages. One of these limitations is that typically it is often difficult to access the individual lines and test either in the distribution line direction or the equipment direction as desired from the front of the distribution frame panel. Another disadvantage is that many such systems must be wired from one side of the panel and then cross-connected from the other side, making access to the panel during the wiring process difficult and cumbersome. Third, over-voltage protector devices in the prior art are often expensive to fabricate, and subject to reliability problems. Fourth, systems in the prior art typically have different connection terminals, one set of which are used for incoming and outgoing leads, and another set for cross-connect functions, which adds to expense and complexity. Fifth, many frames currently on the market are large panels, as opposed to a modular approach.

Summary of the Invention

In response to the above-identified limitations and disadvantages of typical distribution frames, the present invention provides a distribution frame made up of a number of modular elements, each of which has equipment leads, distribution leads, and cross-connect leads connected to front access terminals. This promotes both simplicity and cost effectiveness in wiring and testing.

According to one aspect of the invention, the invention includes a plurality of modules each of which fastens readily into an associated bracket structure. Each of these modules includes a plurality of individual circuit protector devices which insert from a front face thereof. Immediately adjacent the circuit protector structure are a plurality of insulation displacement terminals, each of which has an associated spring contact extension which makes contact to the overload protector when it is inserted. The contact between this terminal and the protector may be broken by a probe insertable into an aperture in the front face of the module which contacts the finger and flexes it away from the contact with the protector contact, at the same time allowing electrical contact with the individual conductor surface for test purposes.

According to another aspect of the invention, the individual modules have a wire guide structure which provides individual channels for each of the wires to allow front access to both the equipment and distribution line connections. The wire guide structure is further provided with a strain relief design forming a part thereof which facilitates reliability in the wiring.

According to another aspect of the invention, the protector includes a two-part cylindrical protector cover, which surrounds a printed circuit board, the ends of which extend outward from the protector cover. The printed circuit board has printed conductors on it which make connection to the insulation displacement connector contact extension. In addition, the board holds an overvoltage voltage or overcurrent protector, which is in turn encapsulated by the protector cover. The board extends out of opposite sides of the protector, one end contacting a ground clip, and the other end connecting associated contact extensions.

The resulting system is compact, cost effective tive, and provides ready front access both for purposes of testing and wiring. These and other salient features of this invention, together with other advantages which result from various classes of embodiments, are described below in more detail in the following description and drawings. The claims set out further embodiments.

Brief Description of the Drawings

FIGURE 1 is a perspective view showing one form of bracket to be used with a number of modules of the present invention, one of which is shown assembled to the bracket;

FIGURE 2 is a exploded perspective view of the structure of FIGURE 1, showing the various details of construction;

FIGURE 3 is an exploded perspective of a protector element constructed according to one embodiment of the present invention;

FIGURE 4 is a plan view of a module constructed according to the invention as shown in FIGURE 1;

FIGURE 5 is a side elevation, portions broken away and shown in cross-section, to illustrate use of the module shown in FIGURES 1 and 4;

FIGURE 6 is a sectional view of the structure of FIGURE 4 taken along lines 6-6 as shown in FIGURE 4;

FIGURE 7 is a side elevation of the module as shown in FIGURES 4 and 5 from the side opposite that shown in FIGURE 5;

FIGURE 8 is a sectional view showing a portion of the mounting structure of the module;

FIGURE 9 is a sectional view of the structure of FIGURE 4 taken along lines 9-9 of FIGURE 4;

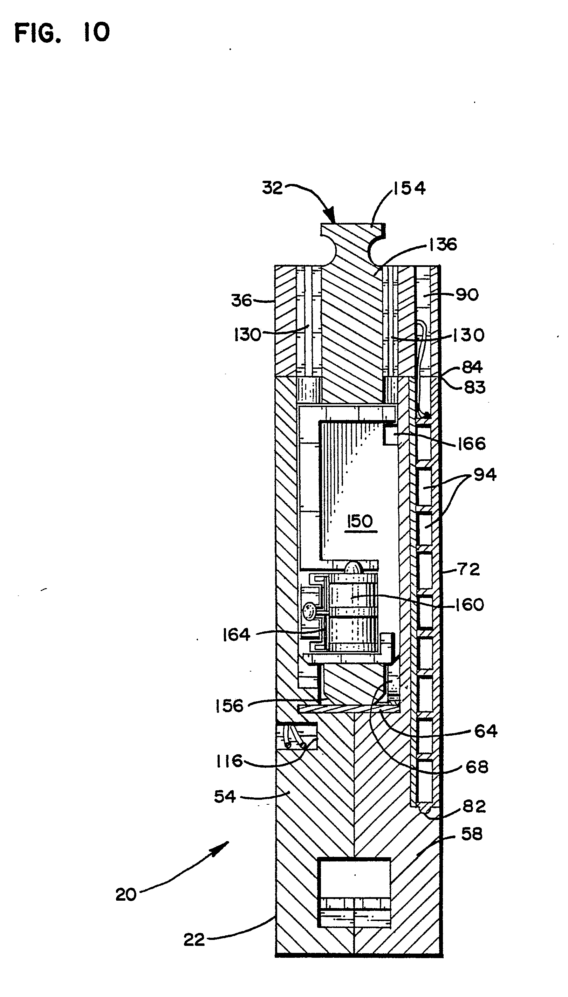

FIGURE 10 is a sectional view of the structure of FIGURE 4 taken along the lines 10-10 of FIGURE 4;

FIGURE 11 is a greatly enlarged view of a section of the strain relief of the wire guide structure taken in side elevation from a portion of that shown in FIGURE 5;

FIGURES 12 and 13 are sectional views taken to illustrate the test access features and operation of the present invention.

Detailed Description of a structure in accordance with the Invention

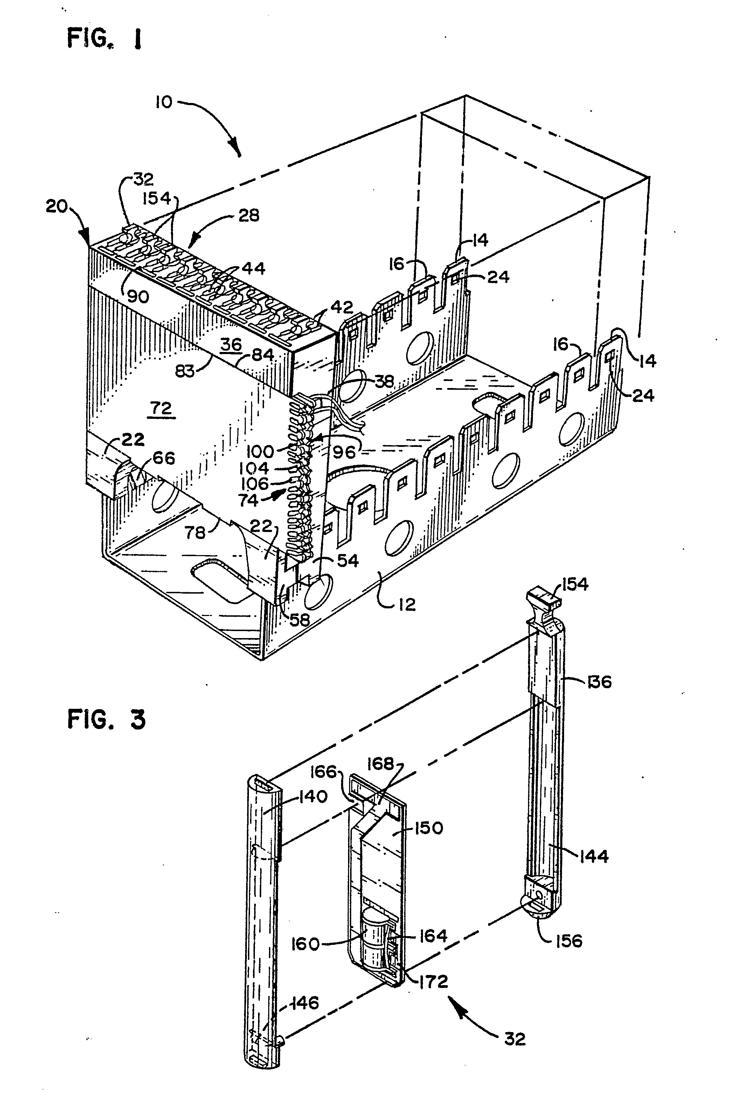

A particular preferred embodiment of the distribution frame according to the present invention is shown in the drawings. With reference particularly to FIGURE 1, there appear portions of the distribution frame generally designated with reference numeral 10. Distribution frame 10 is made up of a U-shaped mounting bracket 12, with the legs of the U having individual pairs of mounting tabs, two pairs of which are labeled 14, 14, and 16, 16 respectively. Each pair of mounting tabs accepts an individual module, so that bracket 12 is configured to accept a total of 10 individual distribution frame modules.

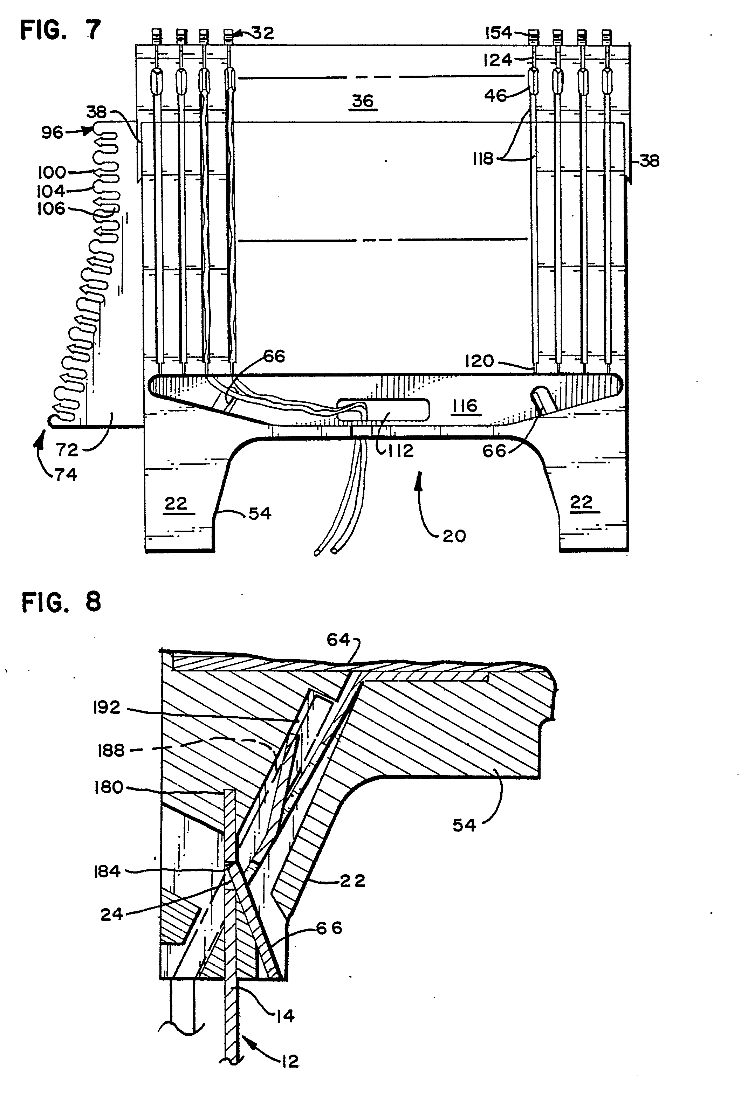

Shown mounted on bracket 12 is a distribution module generally designated 20. Distribution module 20 is a structure having a pair of individual mounting legs 22, 22, each of which has a slot or recess into which an associated mounting tab from bracket 12 may fit. As exemplified by the pair of mounting tabs 14, each mounting tab has a locking aperture. The locking aperture for one of tabs 14 is marked with reference numeral 24. As a part of the structure of module 20, legs 22 are fitted with a locking clip structure shown in more detail and described with reference to the cross-sectional view of FIGURE 8.

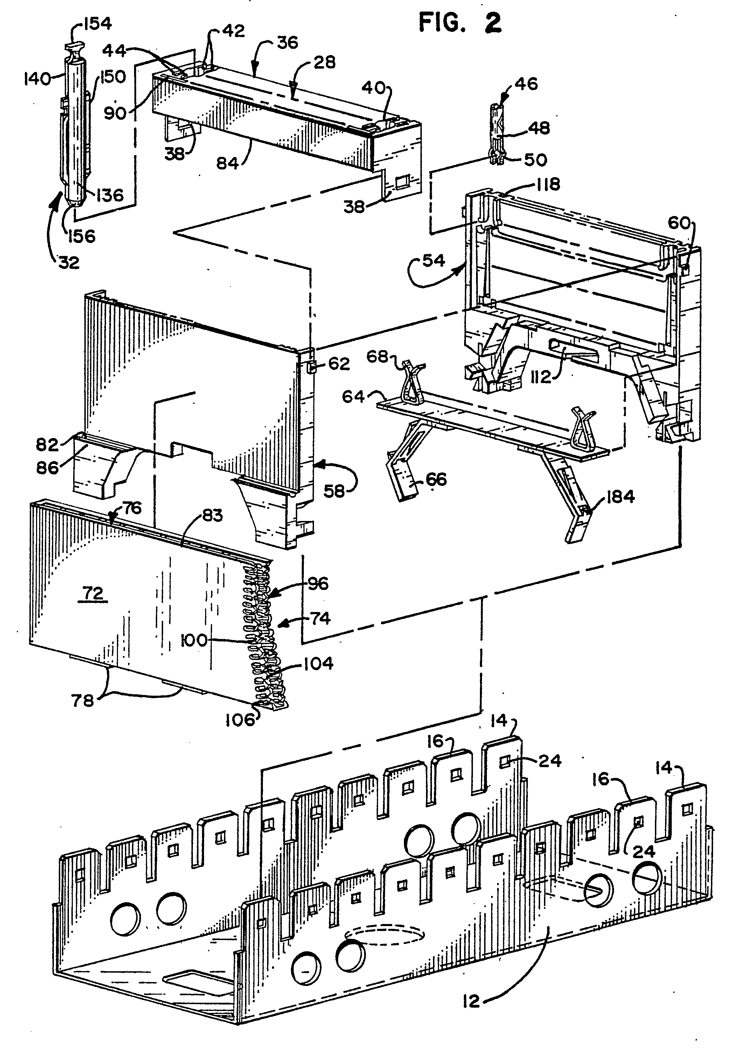

The distribution module 20 shown in FIGURE 1 would, under ordinary circumstances, be one of ten such modules which would be aligned across associated pairs of mounting tabs on bracket 12. Each such module 20 has a front face 28 on which connections to distribution lines and equipment are made. Front face 28 also accepts individual protector elements, as shown more particularly in FIGURE 2.

In FIGURE 2, distribution module 20 is shown in exploded perspective view. In that FIGURE, a representative overload protector element 32 is shown, and assembly lines indicate its insertion into front face 28. Each module 20, in the embodiment shown, is configured to accept ten aligned overload protector elements, as well as associated equipment and distribution lines serviced by such elements. In FIGURE 2, the structure of module 20 and the way in which its various parts interact are shown in more detail. In particular, front face 28 is a portion of a front cover 36 as shown. Front cover 36 is generally rectangular in shape and has two apertured ears 38 at opposite ends thereof to facilitate assembly of module 20. Front cover 36 is provided with a plurality of circularly cylindrical apertures 40. Each of these apertures is sized to accept an associated overload protector element 32. Immediately adjacent each aperture 40 are two pairs of terminal or connector apertures 42 and 44.

In the embodiment shown each of these apertures provides access to a wire connector, both for purposes poses of wiring and for test. An individual one of said connectors is labeled with reference numeral 46, and is shown in FIGURE 2. This connector is often referred to a split cylinder insulation displacement connector, and contains an upper cylindrical portion 48, which forms the wire connecting portion or wire terminating end of the connector, and a contact portion, or end, comprising a pair of contact extensions or spring fingers 50 which extend longitudinally downward from portion 48. The upper cylindrical portion of connector 46 is preferably configured to accept more than one wire. An example of such structure is shown in an application assigned to the same assignee, filed in the name of Vasantrai Vachhani as inventor, and filed of even date herewith.

Front cover 36 is fitted over module body 54. Module body 54 is structured to accept twenty pairs of connectors 46 across its length. It also mates with a body cover 58 to form a closed structure. Module body 54 has an assembly lug 60 at each end thereof. Body cover 58 likewise has an assembly lug 62 at each end thereof. These assembly lugs are captured within the aperture of each of ears 38 in assembly as front cover 36 fits over body cover 58 and module body 54.

The lower part of module body 54 is provided with an irregularly shaped recess which supports a ground strip 64 and a pair of mounting clips 66, 66. Mounting clips 66 may, in a certain class of preferred embodiments, be spot welded to metalic rectangular ground strip 64. Also attached to ground strip 64 are a plurality of metal grounding clips 68. Each of grounding clips 68 attaches to an associated grounding terminal on overload protector element 32 when it is inserted fully into module 20. Although two grounding clips are shown in FIGURE 2, in the configuration shown, there would be ten grounding clips spaced offset with respect to the center of ground strip 64 but longitudinally across the length of strip 64.

Also shown in FIGURE 2 is a connecting wire guide 72 which, together with cover 36, body 54, and body cover 58 makes up the primary structure of module 20. It is contemplated that elements 36, 54, 58 and 72 will typically be molded from plastic or other suitable non-conductive material.

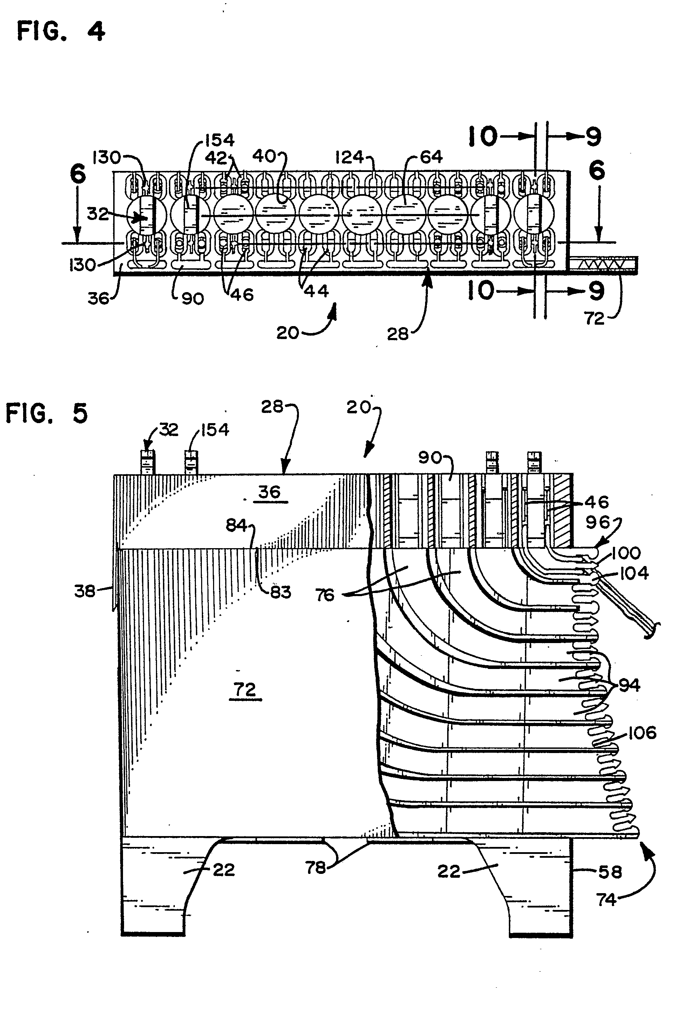

Connecting wire guide 72 is basically a rectangular tangular structure with the exception of a strain relief configuration along the right edge of guide 72 as shown in FIGURE 2. The strain relief portion is generally designated 74 in FIGURE 2. In use, wires from equipment to module body 54 initially pass through strain relief 74 at the right side of guide 72 then through a closed rectangular section passageway to any one of a number of longitudinally spaced wire exits, one of which is identified as wire exit 76. Wire guide 72 has two elongate assembly projections 78 along its bottom closed edge. Assembly projections 78 mate with assembly grooves 82 in assembly to lock wire guide structure 72 into assembly as part of the module. A side edge 83 fits flush against a lower surface 84 of cover 36 so that guide 72 is captured between an offset portion 86 of body cover 58 and front cover 36. As shown more particularly in FIGURE 4, front cover 36 has individual wire exit extensions 90 which register with wire exits 76 to provide a continuous passageway for wire up through front face 28 of cover 36.

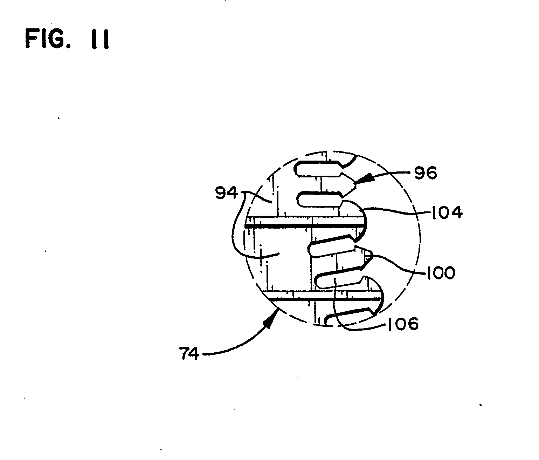

Further details of the structure of wire guide 72 are more particularly shown in the cut-away portion of FIGURE 5. In that FIGURE individual wire passageways are shown in more detail. A representative of one of these passageways is labeled with reference numeral 94. Each passageway is typically capable, in the embodiment shown, of handling two connecting wires. Each passageway has a portion which runs horizontally as shown in FIGURE 5, and a radiussed bend portion which gently directs the wire upwardly as shown in FIGURE 5 to wire exit 76. Also shown in partial section in FIGURE 5 is a portion of front cover 36. Front cover 36, as previously mentioned, has a plurality of wire exit extensions 90 which guide the wires upwardly and out front face 28. The details of construction of the strain relief of wire guide 72 are shown more particularly in the enlarged view of FIGURE 11 taken in combination with the view of FIGURE 5. In FIGURE 5, a pair of wires are shown connected in the right most passageway of wire guide 72. The connection of these wires to each of a pair of connectors 46 is protected by means of individual strain relief element 96. Strain relief elements 96, in the particular embodiment shown, include a central arrow-shaped projection 100 for each passageway. On each side of the arrow-shaped projections 100, there is a corresponding bulb-shaped projection 104. The arrow-shaped outer end of projection 100 and the bulb-shaped outer end of projection 104 combine to create a narrow passageway which captures an individual wire placed through the narrow entry and into a recess, an example of which is labeled recess 106 in FIGURE 11. It will be noted that the strain relief side of wire guide 72 has a straight section followed by a segment which is angled outward. This is to facilitate easy connection and passage of wires through the wire guide. In addition, there are strain relief elements formed on both the front and back walls of wire guide 72 as appears clearly in FIGURE 2. This permits wire guide 72 to be reversed in a left to right direction so that wires may enter from either side of mounting bracket 12 to a particular module.

FIGURE 7 shows the reverse side of module body 54, and structure which provides the means for wiring the reverse side of module 20. In FIGURE 7, there is shown a wire feed aperture 112, which may accept the wires from an incoming feed cable and route them to appropriate connection terminals. Aperture 112 feeds into a wire distribution recess 116 which is a regular trapezoid in shape and provides a space for individual wires to feed to each of a plurality of wire guide grooves, an example of which is marked 118 in the FIGURE. In a typical structure of the type shown in FIGURE 7, with ten protectors, there will be twenty individual wire guide grooves like 118. Although in the fully wired condition each of these grooves will be filled, in the example shown in FIGURE 7 only two wires are fed through aperture 112 across distribution recess 116 and into a pair of wire guide grooves upwardly for connection to connectors 46 for clarity in disclosure. The reverse side of body 54 as shown in FIGURE 7 may also be provided with narrowed sections 120 and 124 at opposite ends of wire guide grooves 118 to provide strain relief for the wire being connected on this side.

FIGURE 4 shows additional details of the construction of front face 28 of cover 36. In particular, it shows circular apertures 40 into which individual overload protector elements 32 will fit.

In FIGURE 4 of the drawings, associated with each of apertures 40 are four individual contacts or connectors 46. One pair of contacts 46 accepts connecting wires from wire exit extensions 90, while the opposite pair accepts wires from wire guide grooves 118 previously discussed. In use, it is contemplated that wire to be connected would be guided through one or the other sets of guideways on one of the sides of module 20 through the strain relief sections, and across the tops of split cylinder connectors 46. A connection tool which can be used to perform a simultaneous cutoff, insulation displacement and connection function with respect to each of the wires captured by individual strain reliefs on front face 28, would then complete assembly. FIGURE 4 shows a pair of individual wires which have been connected, one set at each end of module 20 extending through one of wire exit extensions 90. Also shown in FIGURE 4 are the ends of four overload protector elements 32, two at each of the ends of front face 28. As also shown in FIGURE 4, front face 28 includes a pair of cross-shaped apertures 130 on opposed sides of each of apertures 40. When a overload protector element 32 is placed in one of apertures 40, the portions of the printed circuit board which extend beyond the cylindrical cover of element 32 slide into elongate cross shaped apertures 130 and downward into the module to make appropriate contact with grounding clips 68 and connector spring fingers 50. Cross shaped apertures 130 are also used for the purpose of what is typically referred to in the art as "break access" testing. This is a testing procedure in which there is a break in the circuit as part of the testing of equipment or condition of a distribution line.

FIGURE 3 shows an exploded perspective view of overload protector element 32. In that FIGURE, there are three primary parts. A protector cover half 136 is formed to mate with a second protector cover half 140 to form a cover which is generally circularly cylindrical in shape. Cover halves 136 and 140 have recesses 144 and 146 which accept a printed circuit board element 150. At one end of protector cover half 136 is a protector handle 154 which allows ready insertion and removal of the protector during use. At the opposite end of cover half 136 is a truncated cone shaped end 156. Printed circuit board 150 includes a conventional overload protection device, which in the embodiment shown is a gas over-voltage protection element of conventional type, which may be a gas discharge element 160. Alternately, over-current protection could be incorporated on printed circuit board 150. In use in the embodiment shown, the element 160 senses an over-voltage condition and shunts to ground if over-voltage occurs. If the over-voltage continues for an extended time, element 160 heats up until an insulated wire shunt 164 becomes effective. At that point, the insulation on insulated wire shunt 164 melts and creates an alternate path to ground so that heating of element 160 is discontinued. The individual portions of elements 160 which need to be connected to contacts on printed circuit board 150 are typically soldered in place connections, and the printed circuit board contacts used provide an effective and inexpensive way of manufacturing a protector circuit with the desired contact configuration. The contact configuration can of course readily be changed merely by using an alternate printed circuit board. Printed circuit board 150 has a notch 166 which cooperates with contact fingers 50 so that by means of a slight upward shift of element 32, contact between fingers 50 and an associated contact, such as 168, is readily broken.

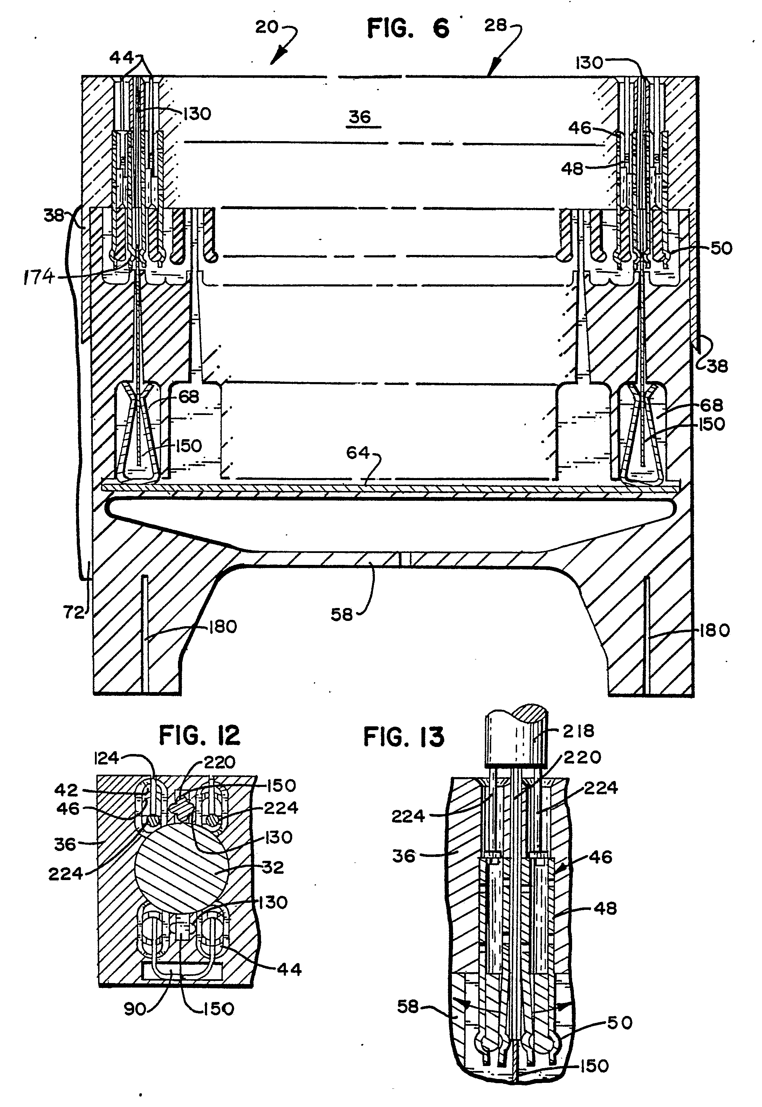

FIGURE 6 illustrates the internal structure of module 20 when protector 32 is inserted therein. FIGURE 6 is a sectional view along the lines 6-6 of FIGURE 4. In that view, a portion of printed circuit board 150 is shown in contact with clips 68. In the specific embodiment shown in FIGURE 3, this is identified as ground contact 172. Also shown in FIGURE 6 is the contact of the fingers 50 with appropriate contacts on printed circuit board 150. As shown in the FIGURE, fingers 50 are formed with rounded projections 174 thereon. Projections 174 make contact with appropriate contacts on board 150 when protector element 32 in inserted as shown in FIGURE 6.

FIGURE 8 is a sectional view of a portion of module 20 to show the interaction between mounting tabs on bracket 12 and the mounting clips 66. In FIGURE 8, a mounting tab 14 extends upward into a recess 180 in leg 22 of distribution module 20. As previously discussed each of the mounting tabs has a locking aperture 24 shown in the sectional view. As legs 22 are moved over tab 14, a projection 184 mates with aperture 24 to firmly mount the module. Also shown in dotted in FIGURE 8 is an alternate form of mounting tab, wherein a single angular tab or bracket 188 extends upward into a mating angled recess or groove 192 in leg 22. With the construction shown, mounting clips 66 are configured to accept either type of mounting without modification.

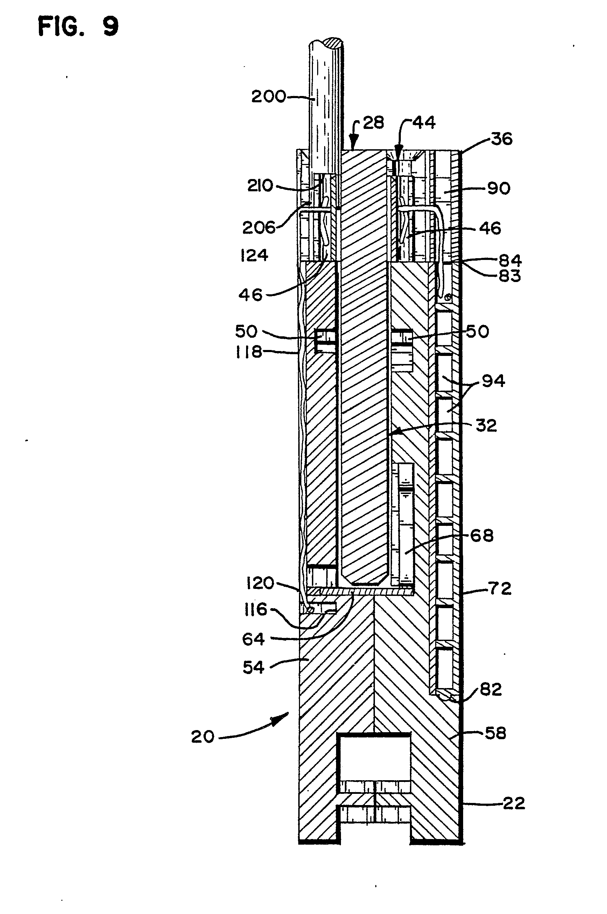

FIGURE 9 is a sectional view of FIGURE 4 along the lines 9-9, and also shows a portion of a mounting tool working against a split cylinder insulation displacement connector to connect a wire on the left side thereof. In FIGURE 9, an insulation displacement connector tool tip 200 is shown. The tool tip is configured with a central circularly cylindrical element which extends downward into the insulation displacement connector in a manner familiar to those of skill in the art of insulation displacement connectors. Tool tip 200 contains a second surrounding portion 206 which surrounds the element and forces the wire downward into the insulation displacement slot for connection. Surround 206 also cuts off excess wire from the opposite side of the connector. In operation, tool tip 200 contains a shoulder 210 which mates with the top edge of connector 46 to define the final vertical position of the wire being connected.

FIGURES 12 and 13 illustrate a break access and test feature of the module structure. In these FIGURES, a test probe having a central cross shaped elongate projection 220 is shown. Cross shape projection 220 fits downward into mating aperture 130 in front face 28 to separate fingers 50 from contact with contacts on PC board 150 as shown by the arrows in FIGURE 13. At the same time, probe 218 contains a pair of spring loaded contacts 224, sometimes called "pogo" contacts which make resilient contact with the tops of connector elements 46. This permits the probe to break a circuit connection, and isolate either the distribution or equipment side from the front of the frame as desired.

Although the present invention has been described above in a preferred form, those skilled in the art will readily appreciate the various modifications may be made to it without departing from the spirit and scope of the invention, as bounded only by the claims of the application itself.

**Claims**

1. A distribution frame module, comprising:

(a) a generally rectangular module block having a front face with a plurality of first apertures and a plurality of second apertures each in close proximity to one of the first apertures;

(b) a plurality of wire connectors mounted in recessed position in the second apertures, said connectors each having a wire connecting portion and a spring contact finger portion, the spring contact finger portion including a spring contact finger extending into one of the first apertures; and

(c) an overload protector element having an external contact, the element being mounted in one of the first apertures to contact at least one of said contact fingers.

2. The module of claim 1, wherein said module block includes a plurality of wire guides along at least one side of the block to provide wire paths to the front face of the block.

3. The module of claim 1 or claim 2 including test access aperture means in the front face positioned to allow a probe to access the connection between one of said contact fingers and external contacts.

4. The module of any one of claims 1 to 3, further including wire guide means, the wire guide means comprising a generally rectangular block with passageways for entry of wires along one side thereof and exits along an adjacent generally transverse side, to facilitate wiring entry and connection of the block, the wire guide means being mounted to one side of the block.

5. The module of claim 4, wherein the wire guide means is reversible in assembly to the block.

6. The module of claim 4 or claim 5, wherein the passageways for entry have individual strain relief means, and the lower passageways are formed at an obtuse angle to the exit side of the wire guide means.

7. A distribution frame for electrical lines forming portions of an electrical network, said frame comprising:

means for protecting said network from transient electrical signals;

means for connecting said lines to said protecting means;

a module with a front face, said module including means for holding said protecting means and said connecting means, said module further including means for accessing said protecting means and said connecting means through said front face, said module also including means for routing said lines from behind said front face to said connecting means;

a bracket for holding said module;

means for grounding said protecting means to said bracket; and

means for attaching said grounding means to said module; whereby said electrical lines are kept behind said front face while said protecting means and said connecting means may be accessed through said front face.

8. A distribution frame in accordance with claim 7 wherein said module includes a pair of spaced-apart legs with slots therein and wherein said bracket includes a pair of spaced-apart tabs for insertion into said slots, said grounding means contacting said tabs.

9. A distribution frame in accordance with claim 8 wherein said grounding means includes a strip having attached thereto a first clip for receiving said protecting means, said grounding means further including second clips for connection to said bracket.

10. A distribution frame in accordance with claim 9 wherein said attaching means includes an aperture in each of said tabs of said bracket and said second clips of said grounding means each include a projection for fitting into one of said apertures.

11. The distribution frame of any one of claims 7 to 10 wherein said protecting means includes a circuit board having means for shunting to ground when heated, said protecting means further including first and second cover members which fit on at least portions of opposite sides of said circuit board, said circuit board having contacts extending beyond said first and second cover members, one of said contacts being received by said grounding means, at least one of said contacts being in electrical contact with said connecting means.

12. The distribution frame in accordance with claim 11 wherein said connecting means includes a plurality of connectors having a cylindrical portion from which spring fingers extend, at least one of said spring fingers for contacting said circuit board, said cylindrical portion including means for contacting and retaining at least one of said electrical lines.

13. The distribution frame of any one of claims 7 to 12 wherein said module includes a body and a body cover, said module further including a front cover and means for holding said body, said body cover and said front cover together, said grounding means being held between said body and said body cover, at least one of said body and said body cover including means for retaining said connecting means, said protecting means being retained by said grounding means.

14. The distribution frame in accordance with claim 13 wherein one of said body and said body cover includes an aperture and a wire distribution recess, said aperture opening into said recess, said aperture and said recess for receiving a plurality of electrical lines, one of said body and said body covers further including a plurality of wire guide grooves leading from said recess to said connecting means.

15. The distribution frame in accordance with claim 14 wherein said wire guide grooves include means for relieving strain on said wire extending therealong.

16. The distribution frame in accordance with claim 13 including a wire guide and means for attaching said wire guide to one of said body and said body cover, said wire guide providing a plurality of channels for guiding wire from a side to said connecting means.

17. The distribution frame in accordance with claim 16 wherein said wire guide includes means for relieving strain on said guided lines.

18. A module for mounting on a bracket of a distribution frame, said module for interconnecting first wires from an incoming trunk line to second wires forming distribution lines, said module comprising:

means for protecting said incoming trunk line and said distribution lines from harmful signals;

means for interconnecting a pair of first wires with a pair of second wires;

means for grounding said protecting means; and

a primary structure having a front face and a rear, first and second opposite sides, and first and second opposite ends, said primary structure including first, second and third means for holding said protecting means, said interconnecting means, and said grounding means, respectively, said primary structure further including first and second means for routing said first wires of said trunk line and said second wires of said distribution line, respectively;

whereby said first wires are connected through said interconnecting means and said protecting means to said second wires, said protecting means being grounded with said grounding means.

19. The module in accordance with claim 18 wherein said first routing means includes a recess in said primary structure near said rear, said first routing means further including an opening in the bottom of said primary structure for communicating with said recess and a plurality of grooves in the first side of said primary structure for communicating between said recess and said interconnecting means.

20. The module in accordance with claim 19 wherein said first routing means further includes means for relieving strain on said first wires, said strain relieving means being formed in conjunction with said grooves.

21. The module of any one of claims 18 to 20 wherein said second routing means includes a wire guide having a plurality of passageways extending from the first end of said primary structure toward the front face of said primary structure.

22. The module in accordance with claim 21 wherein said second routing means includes a wall with an edge along said first end of said primary structure, said second routing means further including means for relieving strain on said second wires being guided through the passageways, said strain relieving means including a recess formed between a bulb-shaped projection and an arrow-shape projection in said wall at said first end.

23. The module in accordance with claim 18 wherein said primary structure includes a body and a body cover, said primary structure further including a top cover and means for holding said body, said body cover and said top cover together, one of said body and said body cover including an offset portion, said primary structure also including a wire guide and means for attaching said wire guide between said offset portion and said top cover.

24. The module in accordance with claim 23 wherein said front cover includes a plurality of apertures for receiving said interconnecting means, and wherein said wire guide includes a plurality of passageways extending from the first end of said primary structure to the top cover, said passageways meeting with said apertures to provide guides for said second wires from said first end to said connecting means.

25. The module in accordance with claim 24 wherein the first end of said wire guide includes an end portion which extends beyond the first end of said body and said body cover, said end portion including means for relieving strain on said second wires guided by said wire guide, said end portion including a straight section and an outwardly angled section to facilitate passage of said second wires through said wire guide.

26. A module for mounting to a bracket of a distribution frame, said module for interconnecting first wires from an incoming trunk line to second wires forming distribution lines, said module comprising:

means for protecting one of said incoming trunk line and said distribution lines from a transient signal carried along the other, said protecting means including a circuit board having means for shunting to ground when sufficiently heated, said protecting means further including means for covering at least portions of opposite sides of said circuit board, said circuit board having contacts extending beyond said covering means;

means for connecting a pair of first wires with a pair of second wires, said connecting means including four connectors spaced about said protecting means, each of said connectors including a spring finger for contacting one of said contacts on said circuit board, each of said connectors further including means for retaining at least one of said lines;

means for grounding said protecting means;

a primary structure having a front face and a rear, first and second opposite sides, and first and second opposite ends, said primary structure including first, second and third means for holding said protecting means, said interconnecting means, and said grounding means, respectively, said primary structure further including first and second means for routing said first wires of said trunk line and said second wires of said distribution lines, respectively, said first routing means including an aperture and a wire distribution recess, said aperture opening into said recess, said first routing means further including a plurality of wire guides leading from said recess to at least two of said connectors, said wire guides including first means for relieving strain on said first wires extending therealong, said second routing means including a wire guide having a plurality of passageways extending from the first end of said primary structure to a different two of said connectors, said wire guide further including second means for relieving strain on said second wires extending therealong.

## FIG. 1

## FIG. 3

FIG. 2

0 194 123

FIG. 4

FIG. 5

## FIG. 6

## FIG. 12

## FIG. 13

**FIG. 7**

**FIG. 8**

FIG. 9

# FIG. 10

# FIG. 11